# EUROPEAN PATENT APPLICATION

(11) **EP 3 438 954 A1**
(43) Date of publication of application: **06.02.2019**
(21) Application number: 17770052.3
(22) Date of filing: 14.03.2017
(51) Int. Cl.: G09B 29/00, G06Q 50/02, G09B 29/10

(54) **AGRIBUSINESS SUPPORT SYSTEM, AGRIBUSINESS SUPPORT METHOD, CONTROL DEVICE, COMMUNICATIONS TERMINAL, CONTROL METHOD, AND RECORDING MEDIUM HAVING CONTROL PROGRAM RECORDED THEREIN**

(30) Priority: 24.03.2016 JP 2016060450
(71) Applicant: NEC Corporation, Tokyo 108-8001 (JP)
(72) Inventor: SAKAGUCHI Masami, Tokyo 108-8001 (JP); ISHIDA Kousuke, Tokyo 108-8001 (JP); AKIMOTO Shunsuke, Tokyo 108-8001 (JP); MATSUMOTO Shintaro, Tokyo 108-8001 (JP); OOMINATO Shinji, Tokyo 108-8001 (JP)
(74) Representative: Betten & Resch
(86) International application number: PCT/JP2017/010222
(87) International publication number: WO 2017/164009

(57) **Abstract**

In order to determine field regions with high precision, the present invention comprises: a reception unit that receives position information obtained by a position information acquisition unit carried by an operator in a field; a first accumulation unit that accumulates position information received by the reception unit; and a generation unit that, on the basis of the accumulated position information, generates a field region corresponding to a field identifier, on a map. The present invention also comprises a display control unit that performs control such that field regions generated on the map are displayed in an identifiable manner on a communications terminal used by the operator in the field.

## Description

### [Technical Field]

The present invention relates to a farming support system, a farming support method, a control device, a communication terminal, a control method of them, and a control program.

### [Background Art]

In the above-described technical field, PTL 1 discloses a technique that acquires a satellite image, analyzes the satellite image, and superposes the satellite image on map information. After that, the technique estimates a planting state, collates with a real-estate registration information database, and determines the possibility of abandonment of cultivation when a lease contact is not existed. PTL 2 discloses a farming support system that allocates workers and equipment to works in a plurality of fields that are located away from one another. PTL 3 discloses a system that generates data obtained by combining qualities and other factors relevant to crops, analyzes the generated data, and issues an alert to a user or the like based on the analyzed result.

### [Citation List]

### [Patent Literature]

PTL 1: Japanese Unexamined Patent Application Publication No. 2014-098993
PTL 2: Japanese Unexamined Patent Application Publication No. 2013-254356
PTL 3: US patent application publication No. 2014/0089045

### [Summary of Invention]

### [Technical Problem]

However, the technique disclosed in PTL 1 estimates a planting state by superposing the analysis result of the satellite image on map information. Thus, according to the conventional technique, accuracy of determination relating to a field area relies on preciseness of the satellite image. Further, according to the conventional technique, when an obstacle is in the satellite image, the field area cannot be accurately determined.

An objective of the present invention is to provide a technique for solving the above-described problem.

### [Solution to Problem]

A control device according to the present invention including:
receiving means for receiving position information obtained by position information obtainment means carried by a worker of a field;
first storage means for storing the position information received by the receiving means; and
generation means for generating a field area identified by a field identifier on a map including the field based on the stored position information.

A control method according to the present invention including:
receiving position information obtained by position information obtainment means carried by a worker of a field;
storing the received position information to storage means; and
generating a field area identified by a field identifier on a map including the field based on the stored position information.

A control program according to the present invention, the program making a computer achieve, the program including:
a receiving function for receiving position information obtained by position information obtainment means carried by a worker of a field;
a first storage function for storing the position information received by the receiving function; and
a generation function for generating a field area identified by a field identifier on a map including the field based on the stored position information.

A communication terminal according to the present invention including:
start means for starting a farming support application program; and
display means for displaying a field area generated on a map by the farming support application program based on position information obtained and stored by position information obtain means carried by a worker of a field; wherein
the display means displays farming information of the field area in accordance with instruction for the field area.

A control method of a communication terminal according to the present invention including:
starting a farming support application program;
controlling display means to display a field area generated on a map by the farming support application program based on position information obtained and stored by position information obtain means carried by a worker of a field; and
displaying farming information of the field area in accordance with instruction for the field area while the displaying means displays the field area.

A control program of a communication terminal according to the present invention, the program causing a computer to achieve:
a start function for starting a farming support application program; and
a display function for displaying a field area generated on a map by the farming support application program based on position information obtained and stored by position information obtain means carried by a worker of a field; wherein
the display means in the display function displays farming information of the field area in accordance with specifying the field area.

A farming support system according to the present invention including:
obtainment means for being carried by a worker of a field and obtaining position information;
storing means for storing the position information obtained by the obtainment means;
generation means for generating a field area identified by a field identifier on a map based on the stored position information; and
display means for displaying the field area generated on the map on a communication terminal identifiably.

A farming support method according to the present invention including:
obtaining position information by position information obtainment means carried by a worker at a field;
storing the obtained position information;
generating a field area identified by a field identifier on a map based on the stored position information; and
displaying the field area generated on the map on a communication terminal identifiably.

### [Advantageous effects of Invention]

According to the present invention, highly accurate determination can be made relating to the field area.

### [Brief Description of Drawings]

Fig. 1 is a block diagram illustrating a configuration of a control device according to a first example embodiment of the present invention.
Fig. 2 is a diagram illustrating an overview of a configuration and operation of a farming support system according to a second example embodiment of the present invention.
Fig. 3 is a sequence diagram illustrating an operation procedure of a farming support system according to the second example embodiment of the present invention.
Fig. 4 is a block diagram illustrating a functional configuration of a field management device as a control device according to the second example embodiment of the present invention.
Fig. 5 is a block diagram illustrating a functional configuration of a communication terminal according to the second example embodiment of the present invention.
Fig. 6A is a diagram illustrating a configuration of a position information database according to the second example embodiment of the present invention.
Fig. 6B is a diagram illustrating a configuration of a field area database according to the second example embodiment of the present invention.
Fig. 6C is a diagram illustrating a configuration of a field registration database according to the second example embodiment of the present invention.
Fig. 7A is a block diagram illustrating a hardware configuration of a field management device as a control device according to the second example embodiment of the present invention.
Fig. 7B is a diagram illustrating a configuration of a field area generation table according to the second example embodiment of the present invention.
Fig. 7C is a diagram illustrating a configuration of an overlap display generation table according to the second example embodiment of the present invention.
Fig. 8 is a flowchart illustrating a processing procedure of a field management device as a control device according to the second example embodiment of the present invention.
Fig. 9A is a flowchart illustrating a procedure of field area generation processing according to the second example embodiment of the present invention.
Fig. 9B is a flowchart illustrating a procedure of field registration processing according to the second example embodiment of the present invention.
Fig. 10A is a block diagram illustrating a hardware configuration of a communication terminal according to the second example embodiment of the present invention.
Fig. 10B is a diagram illustrating a configuration of a field registration table according to the second example embodiment of the present invention.
Fig. 11 is a flowchart illustrating a processing procedure of the communication terminal according to the second example embodiment of the present invention.
Fig. 12 is a diagram illustrating an overview of a configuration and operation of a farming support system according to a third example embodiment of the present invention.
Fig. 13 is a diagram illustrating a configuration of a field area generation table according to the third example embodiment of the present invention.
Fig. 14 is a flowchart illustrating a procedure of field area generation processing according to the third example embodiment of the present invention.
Fig. 15 is a diagram illustrating an overview of a configuration and operation of a farming support system according to a fourth example embodiment of the present invention.
Fig. 16 is a diagram illustrating a configuration of a specific field area table according to the fourth example embodiment of the present invention.
Fig. 17 is a diagram illustrating an overview of a configuration and operation of a farming support system according to a fifth example embodiment of the present invention.
Fig. 18 is a diagram illustrating a configuration of a size adjustment table according to the fifth example embodiment of the present invention.
Fig. 19 is a diagram illustrating a configuration of a field revision table according to the fifth example embodiment of the present invention.
Fig. 20 is a diagram illustrating an overview of a configuration and operation of a farming support system according to a sixth example embodiment of the present invention.
Fig. 21 is a diagram illustrating a configuration of a field revision table according to the sixth example embodiment of the present invention.
Fig. 22 is a diagram illustrating an overview of a farming support by a farming support system according to a seventh example embodiment of the present invention.

### [Example Embodiment]

The following will describe example embodiments of the present invention in detail with reference to drawings. However, components described in the following example embodiments are only examples, which are not intended to limit the technical scope of the present invention to the components. Further, in the block diagrams, an arrow represents only an example of the direction of a certain signal (data, information) flow; the signal (data, information) may be communicated in the opposite direction than the arrow.

### [First example embodiment]

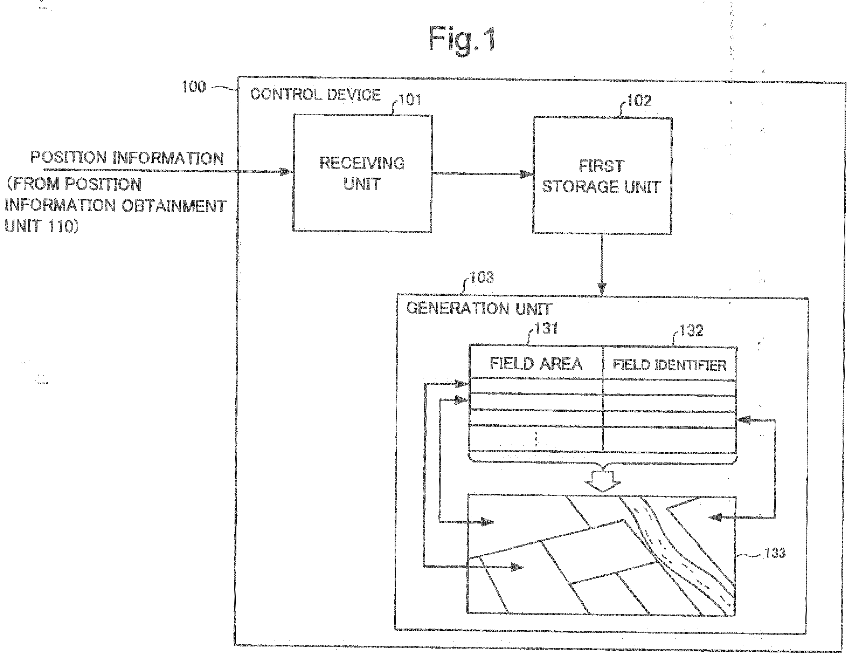

A control device 100 as a first example embodiment of the present invention will be described with reference to Fig. 1. The control device 100 is a device that supports farming.

As illustrated in Fig. 1, the control device 100 includes a receiving unit (receiver) 101, a first storage unit 102, and a generation unit (generator) 103. The receiving unit 101 receives position information that is obtained by a position information obtainment unit (position information obtainer) 110 carried by a worker of a field. The first storage unit 102 stores the position information received by the receiving unit 101. The generation unit 103 generates a field area 131 identified by a field identifier 132, in such a way that the field area 131 overlaps a map image 133 based on the stored position information.

According to the present example embodiment, since a field area is generated based on position information obtained by a position information obtainment unit carried by a worker of a field, a highly accurate field area can be determined.

### [Second example embodiment]

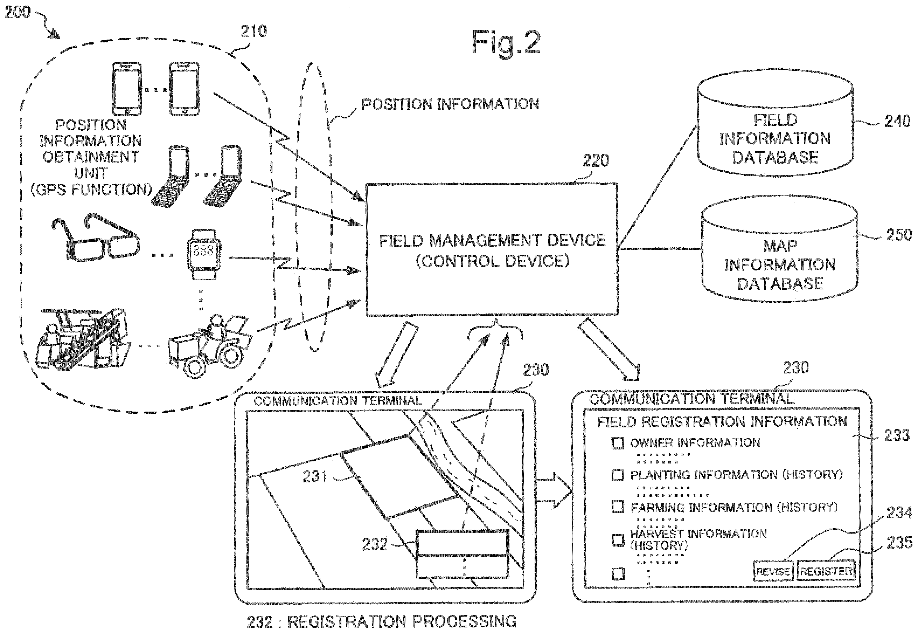

Next, a farming support system that includes a field management device as a control device according to a second example embodiment of the present invention will be described. In the farming support system according to the present example embodiment, a field area identified by a field identifier is generated on a map, based on position information obtained by a position information obtainment unit (position information obtainer) 210 (in Fig. 2, as will be described later) carried by a worker of a field, and the field area is displayed on a communication terminal that is used by the worker for a farming support of the field. Then, information relating to a setting screen for registering the field area is displayed on the communication terminal, in accordance with operation instruction information by the worker for registering to a farming support using the field area as a primary key. In this way, the registration processing for the worker of a field is smoothly achieved without a failure.

### <<Farming support system>>

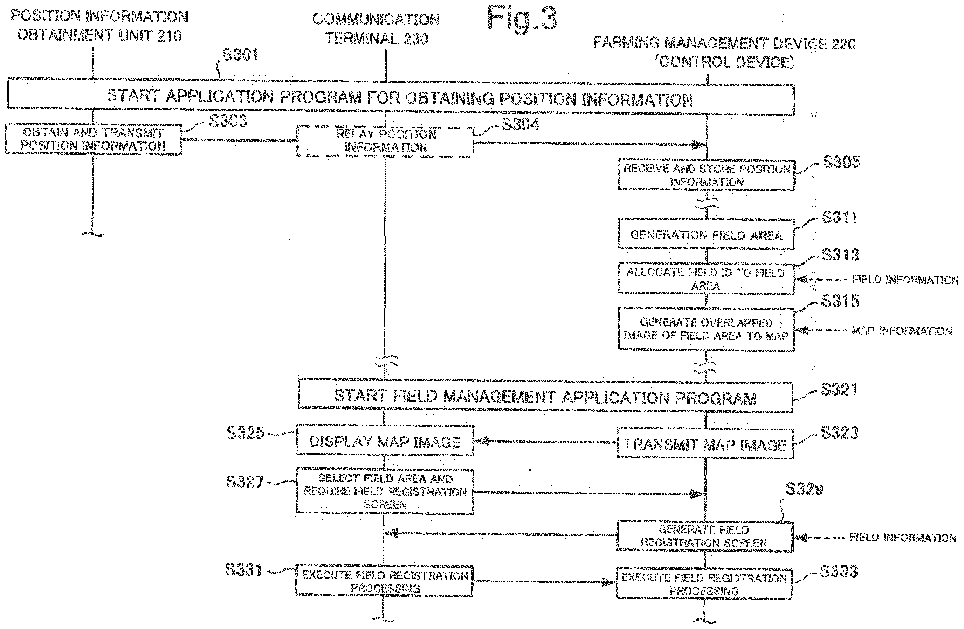

With reference to Figs. 2 and 3, a configuration and operation of a farming support system 200 of the present example embodiment will be described.

### (Overview)

Fig. 2 is a diagram illustrating an overview of a configuration and operation of a farming support system 200 according to the present example embodiment.

The farming support system 200 includes a position information obtainment unit (position information obtainer) 210, a field management device 220 as a control device, a communication terminal 230, a field information database 240, and a map information database 250. The field management device 220 may include the field information database 240 and the map information database 250.

The position information obtainment unit 210 may be, for example, a global positioning system (GPS) function that is equipped in various devices carried by a worker of a field. As illustrated in Fig. 2, the position information obtainment unit 210 is equipped in a smartphone, a tablet, a wearable device, a farming machinery, or the like. The position information obtainment unit 210 may be a simple device that includes a function of obtaining and transmitting position information. The field management device 220 obtains position information from the position information obtainment unit 210 using information relating to the field stored in the field information database 240 and map information stored in the map information database 250, and generates a field area based on the obtained position information. The field management device 220 generates image information where the generated field area overlaps a map, and displays the generated image information on the communication terminal 230 of the worker. Further, when a field area displayed on the communication terminal 230 is specified, the field management device 220 requires a farming support for the field area. In the present example embodiment, in response to registration processing with regard to a field by a farming support application, the field management device 220 provides a field registration screen 233 on which a worker can register the field with an easy operation.

The communication terminal 230 is, for example, a smartphone, a tablet, or a personal computer (PC) used by a worker of a field. When connected to the farming support application provided by the field management device 220, the communication terminal 230 displays a field area generated based on position information by the field management device 220 in such a manner the field area overlaps a map. When the worker of the field specifies the field area 231 of the worker and the registration processing menu 232 on the display screen, the field management device 220 displays a field registration screen 233 used for registration of the field area 231. The field registration screen 233 includes basic information relating to the field area 231. The worker determines whether or not the information is correct, and, based on the determination, further determines whether or not to start a revision input by pressing a revise button 234 or to complete the registration of the field area 231 by pressing a registration button 235 on a confirmation screen. The information for the field area 231 includes, for example, owner information, planting information, farming information, harvest information, and the histories thereof.

### (Operation sequence)

Fig. 3 is a sequence diagram illustrating an operation procedure of a farming support system 200 according to the present example embodiment.

An application program for obtaining position information is activated between the position information obtainment unit 210 and the field management device 220 at step S301. When the communication terminal 230 involves (or, relays) collection of position information, the communication terminal 230 is added in the application program for obtaining position information. The position information obtainment unit 210 obtains position information at step S303, and transmits the obtained position information to the field management device 220. If necessary, the communication terminal 230 relays transmission processing of the position information to the field management device 220 at step S304. The field management device 220 stores the collected position information at step S305.

The field management device 220 generates a field area based on the collected position information at step S311. At step S313, the field management device 220 obtains field information from the field information database 240 and allocates a field identifier (ID) to the generated field area based on the field information. Then, at step S315, the field management device 220 generates a map image that identifiably indicates the field area by overlaying the field area on a map obtained from the map information database 250.

Whereas, a field management application is activated between the communication terminal 230 and the field management device 220 at step S321. The field management device 220 transmits the map image to the communication terminal 230 as a startup screen of the field management application at step S323. The map image is an overlapped map including the field area generated in accordance with the processing indicated at step S315. The communication terminal 230 displays the received map image, on which the mapping was performed, at step S325.

The communication terminal 230 requires the field management device 220 for a field registration screen in response to a specification of the field area selected by the worker and an instruction of registration processing on the field area specified by the worker at step S327. In response to the request for the field registration screen by the communication terminal 230, the field management device 220 obtains field information from the field information database 240 at step S329. The field management device 220 generates the field registration screen including the field information collected with regard to the field area selected by the worker, and transmits the generated field registration screen to the communication terminal 230.

At step S331, in response to an arbitrary operation that the worker performed on the field registration screen, the communication terminal 230 instructs field registration processing relating to the field area to the field management device 220. The field management device 220 executes the field registration processing relating to the field area of the worker at step S333.

### <<Functional configuration of field management device>>

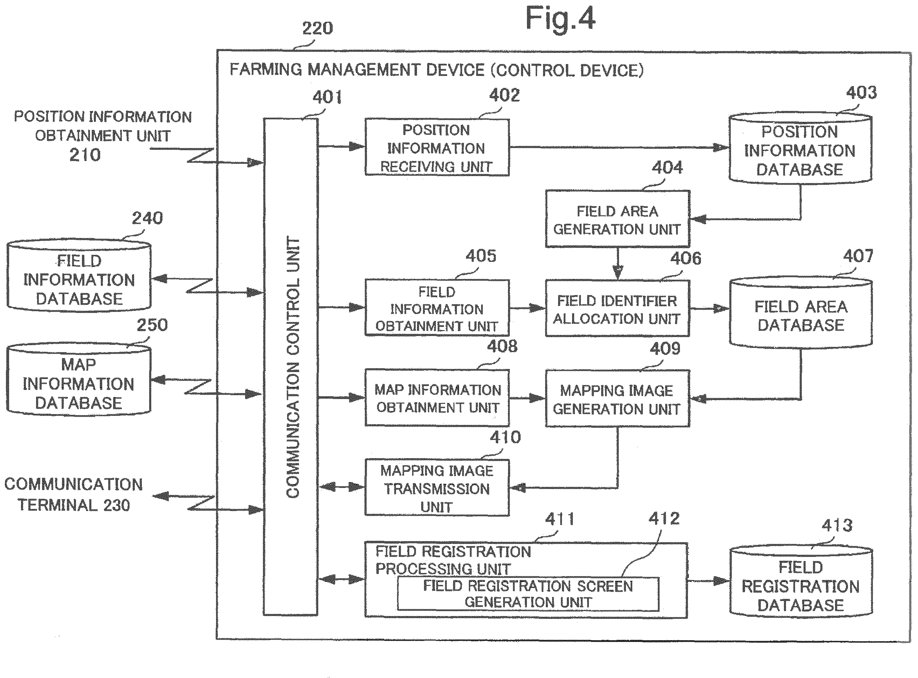

Fig. 4 is a block diagram illustrating a functional configuration of the field management device 220 as a control device according to the present example embodiment.

The field management device 220 includes a communication control unit (communication controller) 401, a position information receiving unit (position information receiver) 402, a position information database 403, a field area generation unit (field area generator) 404, a field information obtainment unit (field information obtainer) 405, a field identifier allocation unit (field identifier allocator) 406, and a field area database 407. Further, the field management device 220 includes a map information obtainment unit (map information obtainer) 408, a mapping image generation unit (mapping image generator) 409, and a mapping image transmission unit (mapping image transmitter) 410. Furthermore, the field management device 220 includes a field registration processing unit (field registration processor) 411, a field registration screen generation unit (field registration screen generator) 412 included in the field registration processing unit 411, and a field registration database 413.

The communication control unit 401 controls communications between the position information obtainment unit 210 and the communication terminal 230. If the field information database 240 and the map information database 250 are independent information providing providers, the communication control unit 401 controls communications with such providers.

The position information receiving unit 402 receives position information transmitted from the position information obtainment unit 210 via the communication control unit 401. The position information database 403, if necessary, registers the position information from the position information receiving unit 402 in association with an identifier of the position information obtainment unit 210. The field area generation unit 404 generates a field area based on the position information stored in the position information database 403.

The field information obtainment unit 405 obtains field information from the field information database 240 via the communication control unit 401. The field information is an identifier of a field in this example. The field identifier allocation unit 406 allocates a field identifier (hereinafter, a field ID) to the field area generated by the field area generation unit 404. The field area database 407 stores the field area in a way searchable by the field ID. Conversely, by referring to such a field area database 407, a field ID can be searched by a field area, as well as, field information can be obtained by specifying a field area thereafter.

The map information obtainment unit 408 obtains map information including a target field area from the map information database 250. The mapping image generation unit 409 generates a mapping image by mapping a field area stored in the field area database 407 on a map. The mapping image transmission unit 410 transmits the mapping image generated by the mapping image generation unit 409 to the communication terminal 230 in which the field management application has been activated.

The communication terminal 230 activates the field management application and the mapping image is displayed on the communication terminal 230. When a target field area and registration processing are instructed on the mapping image, the field registration processing unit 411 generates a field registration screen that refers to the field information in the field information database 240 by using the field registration screen generation unit 412, based on the field ID of the specified field area. The field registration processing unit 411 provides the generated field registration screen to the communication terminal 230. Then, the field registration processing unit 411 obtains field registration information received from the communication terminal 230. The field registration database 413 registers the field information that the worker of the field instructed to register on the communication terminal 230, in a searchable manner. Thereafter, this field registration information is used in farming support processing by the field management application.

### <<Functional configuration of communication terminal>>

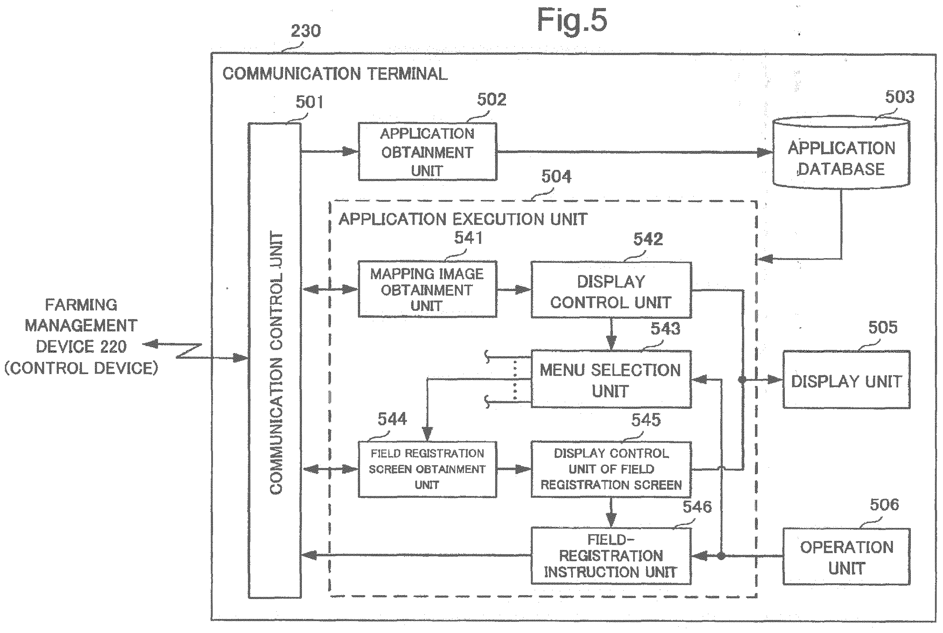

Fig. 5 is a block diagram illustrating the functional configuration of the communication terminal 230 according to the present example embodiment.

The communication terminal 230 includes a communication control unit (communication controller) 501, an application obtainment unit (application obtainer) 502, an application database 503, an application execution unit (application executor) 504, a display unit 505, and an operation unit (operator) 506.

The communication control unit 501 controls a communication between the field management device 220 and the communication terminal 230 as a control device. The application obtainment unit 502 obtains an application executed by the communication terminal 230 from a server (in this example, the field management device 220) via the communication control unit 501. The application database 503 stores applications including a field management application executed by the communication terminal 230. The application execution unit 504 executes an application stored in the application database 503. The display unit 505 displays notification information received from the communication terminal 230. The operation unit 506 receives an operation instruction on the communication terminal 230.

The following will describe the functional configuration of the application execution unit 504 when the field management application in this example is executed. The application execution unit 504 includes a mapping image obtainment unit (mapping image obtainer) 541, a display control unit (display controller) 542, a menu selection unit (menu selector) 543, a field registration screen obtainment unit (field registration screen obtainer) 544, a display control unit (display controller) 545 of field registration screen, and a field registration instruction unit (field registration instructor) 546.

The mapping image obtainment unit 541 obtains a mapping image, where a field area overlaps a map, from the field management device 220 upon activation of the field management application. The display control unit 542 controls processing of displaying the mapping image obtained by the mapping image obtainment unit 541 and a menu image on the display unit 505. The menu selection unit 543 instructs execution in accordance with a menu selected using the operation unit 506. In the present example embodiment, it is assumed that field registration processing is executed. The field registration screen obtainment unit 544 requires the field management device 220 for a field registration screen in accordance with the instruction of the menu selection unit 543 and obtains the required field registration screen from the field management device 220. The display control unit 545 of field registration screen controls to display the obtained field registration screen on the display unit 505. The field registration instruction unit 546 registers the field via the field registration screen in accordance with an operation that was input in the operation unit 506.

### (Position information database)

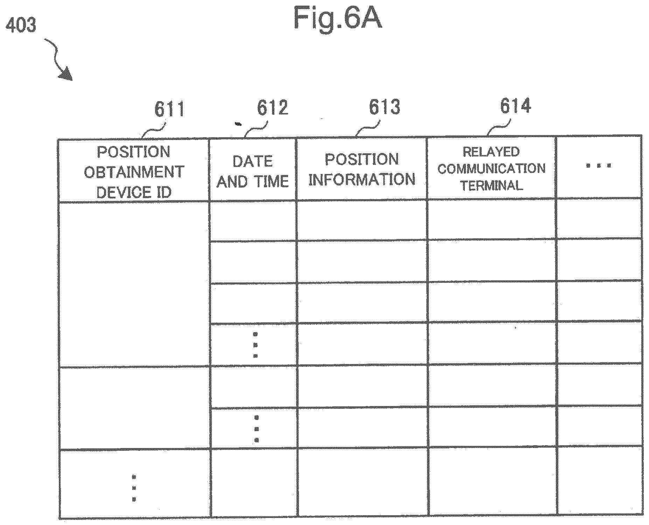

Fig. 6A is a diagram illustrating a configuration of the position information database 403 according to the present example embodiment. The position information database 403 can store position information that was obtained by the position information obtainment unit 210 and collected by the field management device 220. The position information stored in the position information database 403 is used as source information for generating a field area.

The position information database 403 stores the obtainment date and time 612 of position information and the position information 613 in association with a position obtainment device ID 611. When a communication terminal 230 performs relay processing, the position information database 403 stores the position obtainment device ID 611 of the communication terminal 614.

### (Field area database)

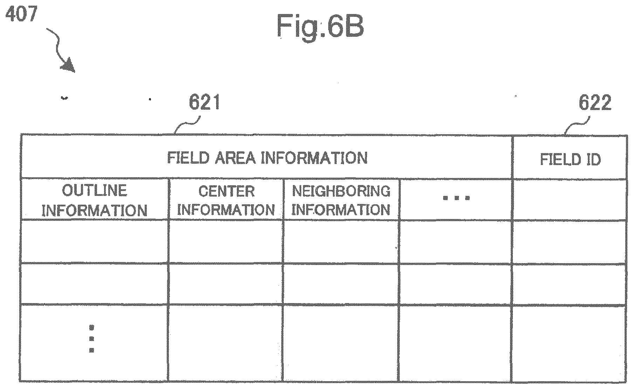

Fig. 6B is a diagram illustrating a configuration of the field area database 407 according to the present example embodiment. The field area database 407 registers field area information 621 relating to the field area in association with a field ID 622. The field area information 621 is generated based on the collected position information. In addition, the field area database 407 generates an image where a field area represented by the field area information 621 overlaps a map. The image generated by the field area database 407 is used in processing of obtaining field information in accordance with an instruction with regard to the field area received from the communication terminal 230.

The field area database 407 stores the generated field area information 621 in association with the field ID 622. The generated field area information 621 includes, for example, outline information of a field area, center information of the field area, and neighboring information with other field areas.

### (Field registration database)

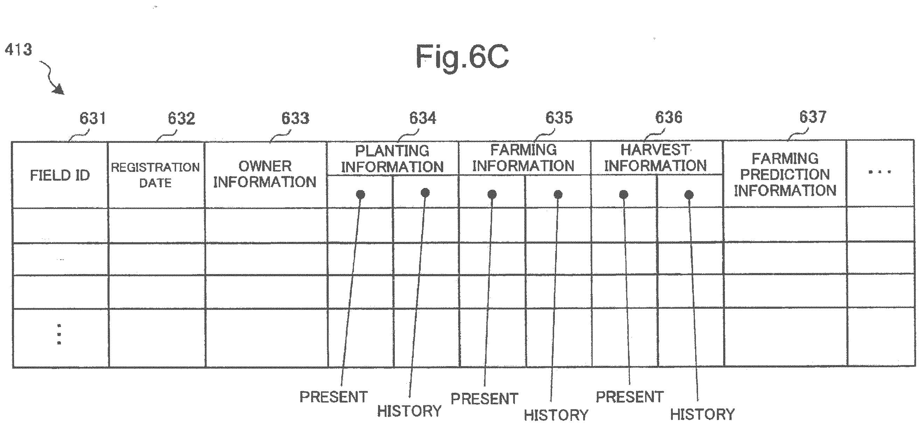

Fig. 6C is a diagram illustrating a configuration of the field registration database 413 according to the present example embodiment. When receiving an instruction on field registration from a communication terminal 230, the field registration database 413 stores registration information relating to a field of a worker who uses the communication terminal 230.

The field registration database 413 stores the registration date of a field 632, owner information 633, planting information 634, farming information 635, harvest information 636, and farming prediction information 637 of the field that was predicted by the field management device 220, in association with a registered field ID 631. The planting information 634, farming information 635, and harvest information 636 include the present information and past history information.

### <<Hardware configuration of field management device>>

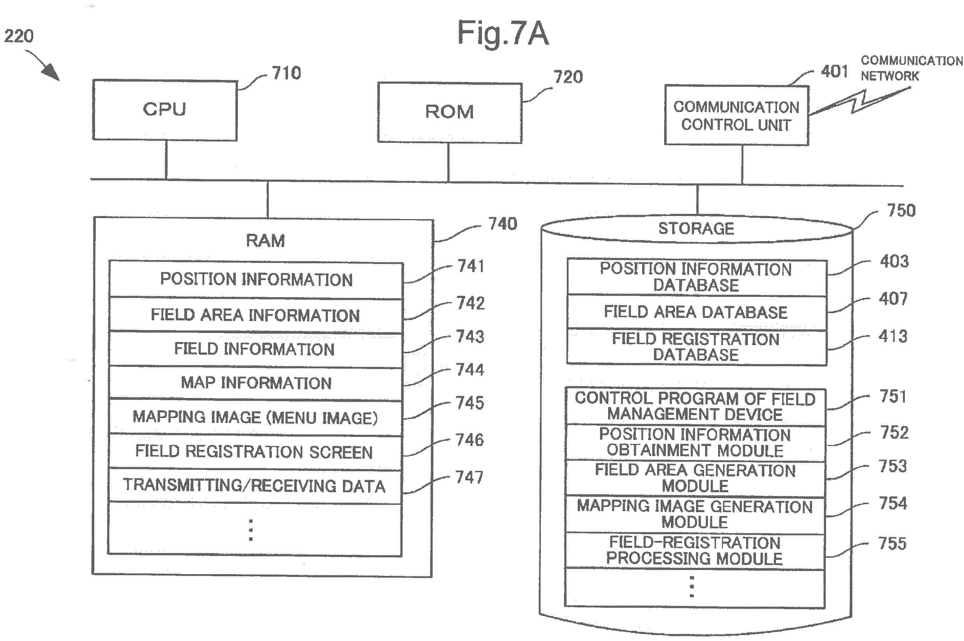

Fig. 7A is a block diagram illustrating the hardware configuration of the field management device 220 as a control device according to the present example embodiment.

In Fig. 7A, a central processing unit (CPU) 710 is a processor that executes operation control and achieves the functional components of Fig. 4 by executing a program. A read only memory (ROM) 720 stores default data, static data of a program and the like, and a program. The communication control unit 401 controls communications with the position information obtainment unit 210 and the communication terminal 230 via a communication network.

A random access memory (RAM) 740 is a random access memory that can be used by the CPU 710 as a temporary storage work area. The RAM 740 has a reserved area for storing data necessary for achieving the present example embodiment. Position information 741 is information received from the position information obtainment unit 210. Field area information 742 is information indicating a field area generated based on the position information. Field information 743 is information obtained from the field information database 240. Map information 744 is information obtained from the map information database 250. A mapping image including menu image 745 is an image where the generated field area is mapped on a map. A field registration screen 746 is screen information generated in response to reception of a field registration request from the communication terminal 230. Transmitting/receiving data 747 are data that are communicated via the communication control unit 401.

A storage 750 stores a database, various parameters, or the following data or program that are necessary for achieving the present example embodiment. The position information database 403 is a database that stores position information collected as illustrated in Fig. 6A. The field area database 407 is a database that stores a field area generated from the position information as illustrated in Fig. 6B. The field registration database 413 is a database that stores field information registered in accordance with a registration instruction by the communication terminal 230 as illustrated in Fig. 6C.

The storage 750 stores the following program. A control program 751 of field management device is a program that controls the field management device 220 as a whole. A position information obtainment module 752 is a module that collects position information from the position information obtainment unit 210. A field area generation module 753 is a module for generating a field area based on the collected position information. A mapping image generation module 754 is a module for generating an image where a field area is mapped on a map. A field registration processing module 755 is a module for processing field registration instructed from the communication terminal 230 as described in the present example embodiment.

A program or data relating to general functions of the field management device 220 or other implementable functions are not illustrated in the RAM 740 or storage 750 of Fig. 7A.

### (Field area generation table)

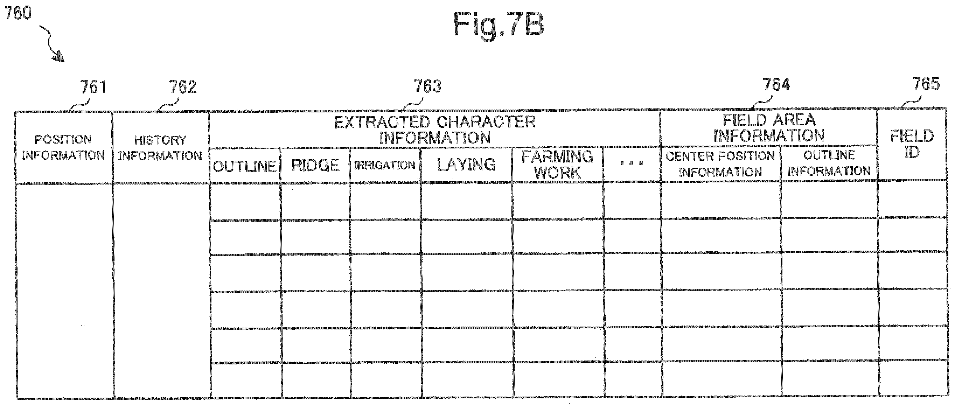

Fig. 7B is a diagram illustrating a configuration of a field area generation table 760 according to the present example embodiment. The field area generation table 760 is a table that is used for generating a field area based on the position information collected by the field management device 220 and that is temporarily generated in the RAM 740.

The field area generation table 760 stores the extracted character information 763, field area information 764, and a field ID 765 that are generated based on the collected position information 761 and the history information 762 thereof. The extracted character information 763 includes information of characteristics relating to a field that was extracted based on the collected position information 761 and the history information 762 of the collected position information (for example, information that is extracted from a set of position information relating to an outline, a ridge, an irrigation, facility construction, a farming work, and the like). Further, the field area information 764 includes the center position information and outline information of the field area. The extracted character information 763 used for generating the field area is not restricted to Fig. 7B. Likewise, the field area information 764 representing the field area is not restricted to Fig. 7B.

### (Overlap display generation table)

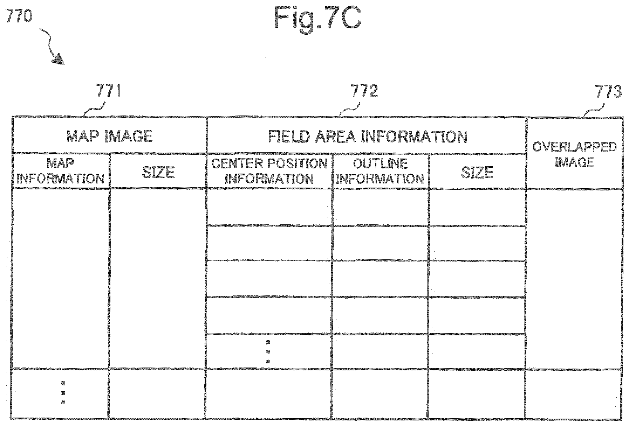

Fig. 7C is a diagram illustrating a configuration of an overlap display generation table 770 according to the present example embodiment. The overlap display generation table 770 is a table that is used in processing of mapping a generated field area on a map and that is temporarily generated in the RAM 740.

The overlap display generation table 770 includes a map image 771, a field area image 772 in a generated map, and an overlapped image 773 where the map image is overlaid on the field area image. The map image 771 and each field area image 772 include information indicating size, and the overlapped image 773 is generated by adjusting the sizes.

### <<Processing procedure of field management device>>

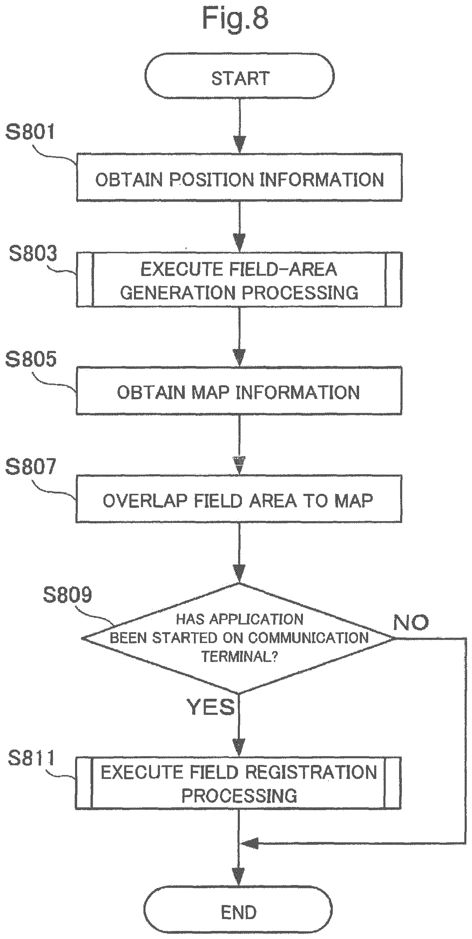

Fig. 8 is a flowchart illustrating a processing procedure of the field management device 220 as a control device according to the present example embodiment. This flowchart is executed by the CPU 710 of Fig. 7A using the RAM 740, thereby achieving the functional components of Fig. 4.

The field management device 220 collects position information from the position information obtainment unit 210 at step S801. The field management device 220 executes field area generation processing for generating a field area based on the collected position information at step S803.

The field management device 220 obtains map information from the map information database 250 at step S805. The field management device 220 overlays the generated field area on a map at step S807.

The field management device 220 determines whether the field management application has been activated in the communication terminal 230 at step S809. When the field management application has been activated, in the present example embodiment, the field management device 220 executes field registration processing at step S811.

### (Field area generation processing)

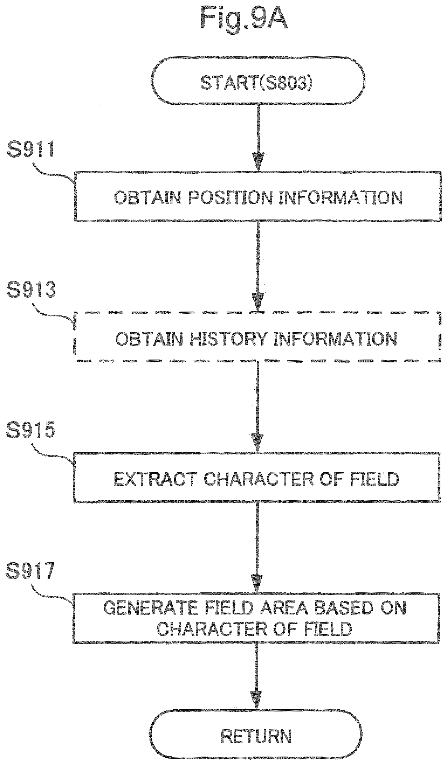

Fig. 9A is a flowchart illustrating a procedure of the field area generation processing (step S803 in Fig. 8) according to the present example embodiment.

The field management device 220 obtains position information collected from the position information database 403 at step S911. Further, if necessary, the field management device 220 obtains history information from the position information database 403 at step S913. Then, the field management device 220 extracts characteristics of a field based on the position information or the history information at step S915. The field management device 220 generates a field area based on the characteristics of the field at step S917.

### (Field registration processing)

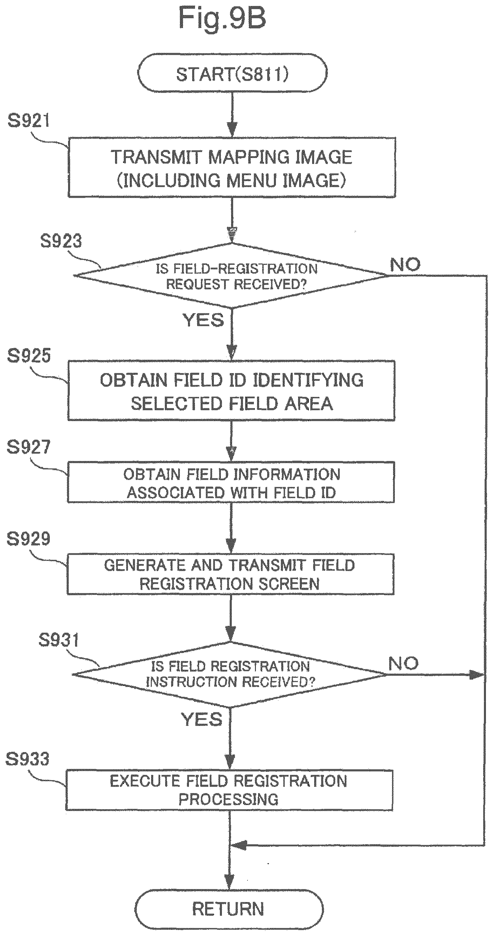

Fig. 9B is a flowchart illustrating a procedure of the field registration processing (step S811 in Fig. 8) according to the present example embodiment.

The field management device 220 provides a mapping image where a field area is mapped on a map to the communication terminal 230, together with a menu image in this example, at step S921. Then, the field management device 220 determines whether or not a field registration request has been received from the communication terminal 230 at step S923. When a field registration request has been received, the field management device 220 obtains, from the field area database 407, a field ID for identifying the field area selected with the communication terminal 230 at step S925.

The field management device 220 obtains field information associated with the field ID, for example, from the field information database 240 at step S927. The field management device 220 may collect the field information. The field management device 220 generates a field registration screen using the obtained field information and provides the generated field registration screen to the communication terminal 230 at step S929. Then, the field management device 220 waits an instruction relating to the field registration from the communication terminal 230 at step S931. When receiving an instruction relating to the field registration, the field management device 220 executes field registration processing with the field registration database 413 at step S933.

### <<Hardware configuration of communication terminal>>

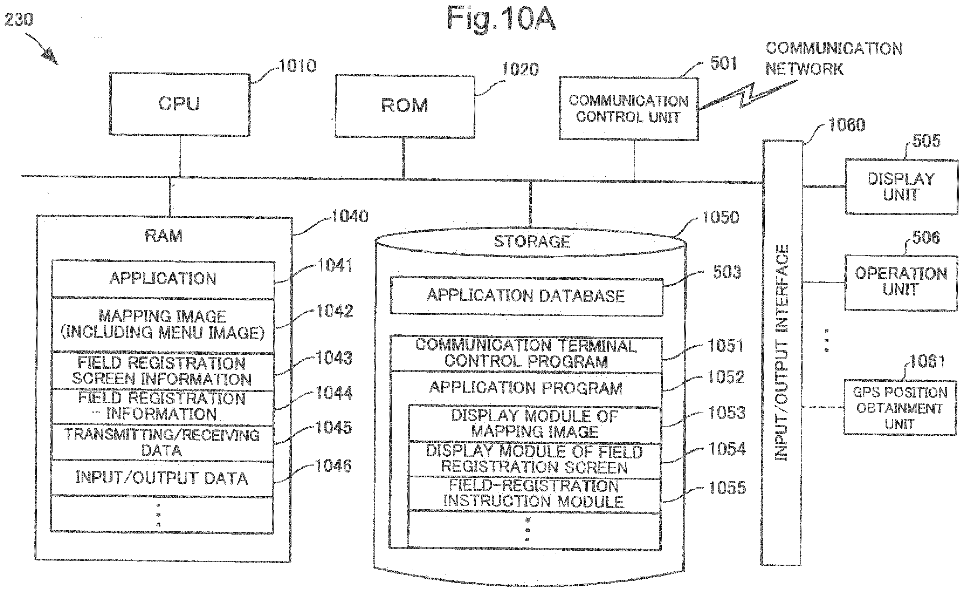

Fig. 10A is a block diagram illustrating the hardware configuration of the communication terminal 230 according to the present example embodiment.

In Fig. 10A, a CPU 1010 is a processor that executes operation control, and achieves the functional components illustrated in Fig. 5 by executing a program. A ROM 1020 stores default data and static data of a program and a program. A communication control unit 501 controls communications with the field management device 220 via a communication network.

A RAM 1040 is a random access memory that is used by the CPU 1010 as a temporary storage work area. The RAM 1040 has a reserved area for storing data necessary for achieving the present example embodiment. An application 1041 is a downloaded program. A mapping image including menu image 1042 is an image transmitted from the field management device 220 when the field management application is activated, and is an image where a field area is mapped on a map. Field registration screen information 1043 is screen information received from the field management device 220 upon registration of a field. Field registration information 1044 is field information to be registered in the field management device 220 from the communication terminal 230. Transmitting/receiving data 1045 are data that are communicated via the communication control unit 501. Input/output data 1046 are data that are input in/output from peripheral devices via an input/output interface 1060.

A storage 1050 stores a database, various parameters, or the following data or programs that are necessary for achieving the present example embodiment. An application database 503 is a database where an application to be executed in the communication terminal 230 is stored. The storage 1050 stores the following programs. A communication terminal control program 1051 is a program that controls the communication terminal 230 as a whole. An application program 1052 is a running application and is a field management application in the present example embodiment.

The application program 1052 as a field management application includes a display module 1053 of mapping image for displaying a received mapping image and a display module 1054 of field registration screen for displaying a received field registration screen, and a field-registration instruction module 1055 that instructs field registration.

The input/output interface 1060 interfaces an input/output with peripheral devices. The input/output interface 1060 is connected with a display unit 505 and an operation unit 506, as well as, for example, a GPS position obtainment unit 1061.

Neither the RAM 1040 nor the storage 1050 of Fig. 10A illustrate a program or data relating to general functions of the communication terminal 230 or other implementable functions thereof.

### (Field registration table)

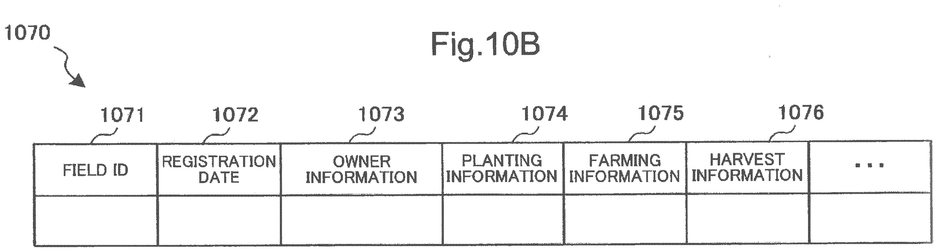

Fig. 10B is a diagram illustrating a configuration of a field registration table 1070 according to the present example embodiment. The field registration table 1070 is used in transmission processing of field information when the communication terminal 230 registers a field.

The field registration table 1070 stores a registration date 1072, owner information 1073, planting information 1074, farming information 1075, harvest information 1076 and the like, in association with a field ID 1071. This information is transmitted to the field management device 220 and then stored in the field registration database 413 in the field management device 220.

### <<Processing procedure of communication terminal>>

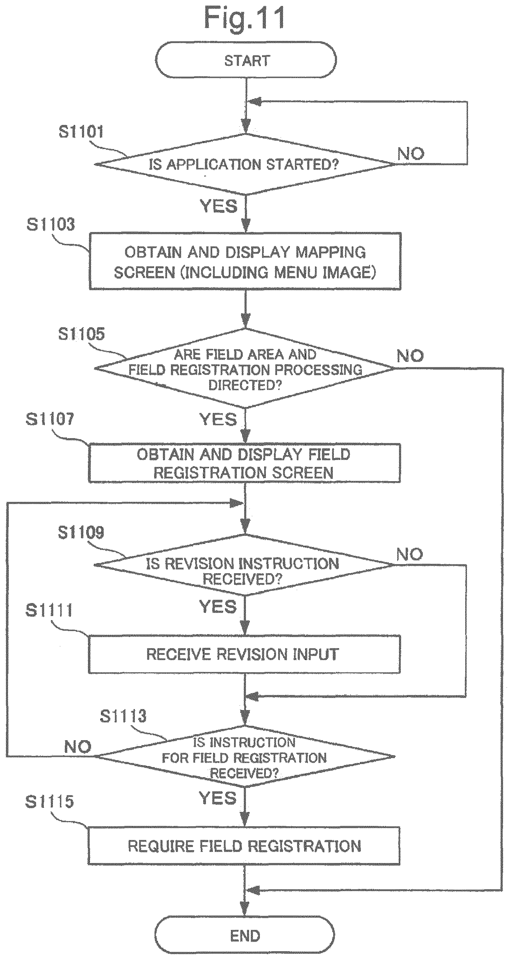

Fig. 11 is a flowchart illustrating a processing procedure of the communication terminal 230 according to the present example embodiment. This flowchart is executed by the CPU 1010 of Fig. 10A using the RAM 1040, thereby achieving the functional components of Fig. 5.

The communication terminal 230 waits activation of an application at step S1101. In the present example embodiment, when the field management application has been activated, the communication terminal 230 obtains a mapping image including a menu image from the field management device 220 and displays the obtained mapping image on the display unit 505 at step S1103. Next, the communication terminal 230 determines whether or not to receive an instruction on a target field area and field registration processing on the display screen at step S1105. When receiving an instruction on the field area and field registration processing, the communication terminal 230 obtains a field registration screen provided by the field management device 220 and displays the obtained field registration number at step S1107.

The communication terminal 230 determines whether or not to receive a revision instruction on the field registration information from a worker of a field at step S1109. When receiving a revision instruction, the communication terminal 230 receives an input indicating a revision content at step S1111. Next, the communication terminal 230 waits an instruction relating to field registration by the worker of the field at step S1113. When receiving an instruction relating to the field registration by the worker of the field, the communication terminal 230 executes a field registration request to the field management device 220 at step S1115.

In the present example embodiment, a highly accurate field area is generated based on position information obtained by a position information obtainment unit carried by a worker of a field. An image where the generated field area overlaps a map is displayed on a communication terminal. The image is used as a key in farming support registration processing. In this way, according to the present example embodiment, registration processing for the farming support can be performed with an easy operation.

### [Third example embodiment]

Next, a farming support system that includes a field management device as a control device according to a third example embodiment of the present invention will be described. The farming support system according to the present example embodiment is different from the second example embodiment in that a field area identified by a field identifier is generated on a map based on predetermined position information that has been obtained by a position information obtainment unit carried by a worker of a field. Other configuration and operation are similar to the second example embodiment, thus, the same signs are assigned to the same configuration and operation and the detailed description thereof will be omitted. Here, the predetermined position information may be an entry position and an exit position when crossing the field area, an irrigation section, a ridge as information surrounding the field area, or the like.

### <<Overview of farming support system>>

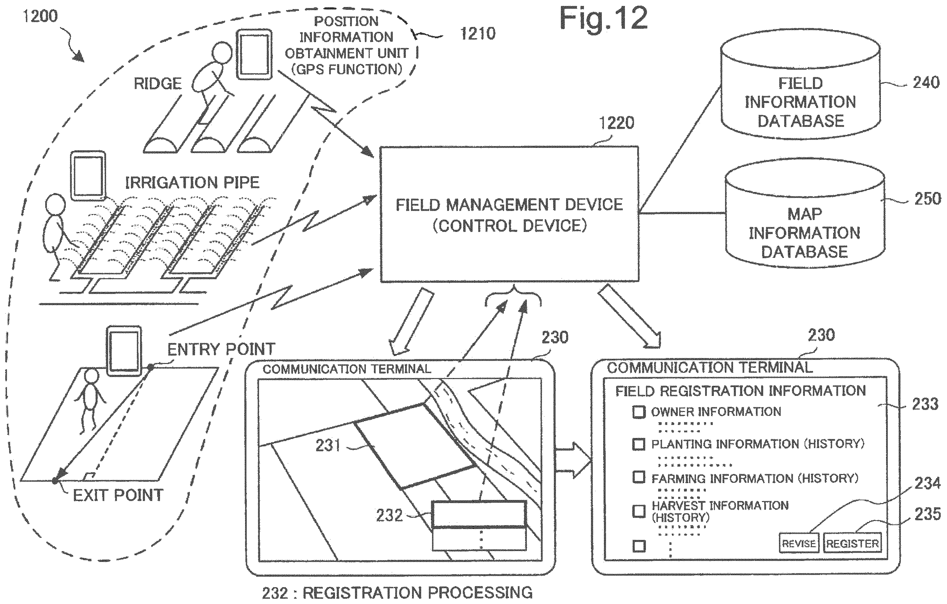

Fig. 12 is a diagram illustrating an overview of a configuration and operation of a farming support system 1200 according to the present example embodiment. In Fig. 12, the same components as those in Fig. 2 are assigned the same reference numbers, thus, the description thereof will be omitted.

In Fig. 12, a position information obtainment unit (position information obtainer) 1210 is not without restriction as illustrated in Fig. 2 but with predetermined restrictions. The restrictions may include a case where a worker transmits position information to the field management device 1220 while walking along a ridge of a field, a case where a worker transmits position information to the field management device 1220 while walking along an irrigation pipe, or a case where a worker transmits a position where the worker entered a field and a position where the worker exited the field to the field management device 1220 while walking across the field. When the field is large, a worker may move on a work vehicle instead of walking.

The field management device 1220 generates a field area, based on position information where such contents have been defined in advance. In this way, a field area can be generated faster using a small amount of position information. Since the following processing is similar to the one of Fig. 2, the overlapping description will be omitted.

### (Field area generation table)

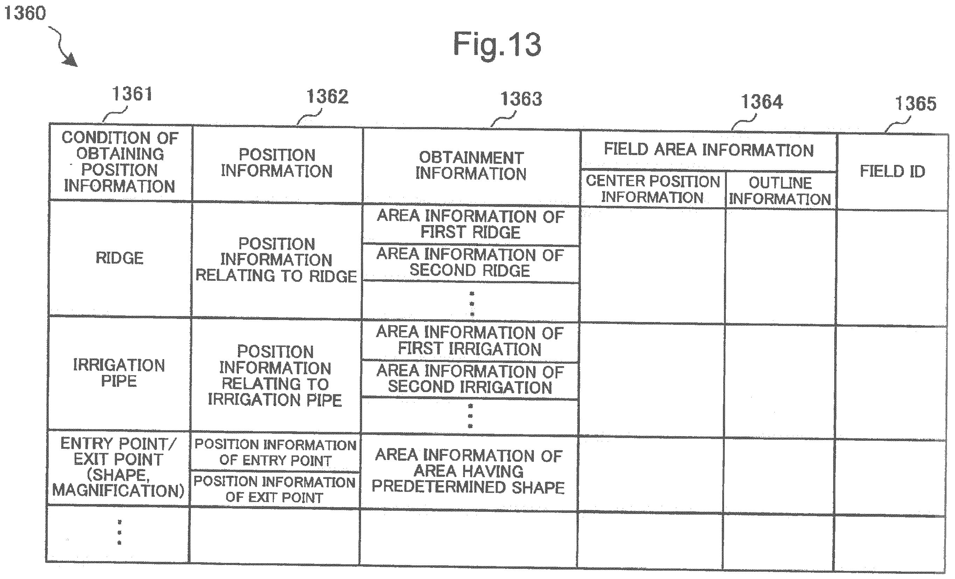

Fig. 13 is a diagram illustrating a configuration of a field area generation table 1360 according to the present example embodiment. The field area generation table 1360 is used for generating a field area according to a predetermined condition of obtaining position information.

The field area generation table 1360 stores obtained position information 1362, obtainment information 1363 that is obtained from the position information 1362, field area information 1364 that is generated from the obtainment information 1363, and a field ID 1365 that is associated with the field area information 1364, in association with a condition of obtaining position information 1361.

For example, when the condition of obtaining position information 1361 is "ridge," the position information 1362 is position information relating to a ridge. The obtainment information 1363 is area information pertaining to each ridge. The field area information 1364 is information of a field area that is obtained by combining the area information pertaining to the ridge.

Further, when the condition of obtaining position information 1361 is "irrigation pipe," the position information 1362 is position information relating to an irrigation pipe. The obtainment information 1363 is individual irrigation area information. The field area information 1364 is information pertaining to a field area that is obtained by combining the irrigation area information.

Furthermore, when the condition of obtaining position information 1361 is "entry point and exit point" that involves auxiliary information, such as the shape and magnification of the field area, the position information 1362 is position information representing an entry point of the field area and position information representing an exit point of the field area. The obtainment information 1363 is area information that has a predetermined shape that is generated based on the position information relating to the entry point and the position information relating to the exit point. The field area information 1364 is area information that has a predetermined shape. For example, when the condition of obtaining position information 1361 is "entry point and exit point," the relation among the field, the entry point, and the exit point may be determined in advance and the field area may be calculated, or, the shape of the field may be determined in advance and the shape arranged based on the entry point and exit point may be set as the field.

### (Field area generation processing)

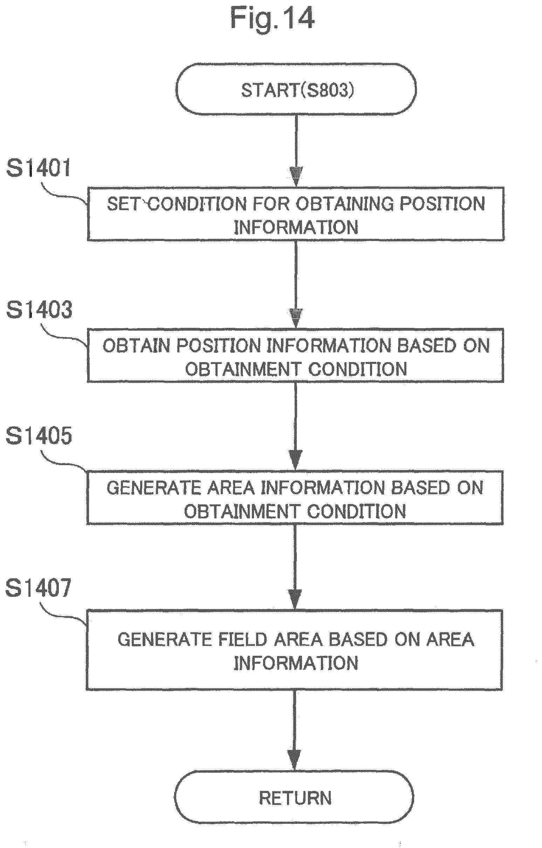

Fig. 14 is a flowchart illustrating a procedure of the field area generation processing (step S803) according to the present example embodiment.

The field management device 1220 sets an obtainment condition relating to the position information at step S1401. The obtainment condition may be, for example, "ridge," "irrigation pipe," or "entry and exit of field." The field management device 1220 obtains position information according to the obtainment condition from the position information obtainment unit 1210 at step S1403. The field management device 1220 generates area information in accordance with a protocol based on the obtainment condition at step S1405. Then, the field management device 1220 generates a final field area based on the area information at step S1407.

According to the present example embodiment, as an image where a field area identified by a field identifier overlaps a map is generated based on predetermined position information, a field area can be easily generated.

### [Fourth example embodiment]

Next, a farming support system that includes a field management device as a control device according to a fourth example embodiment of the present invention will be described. The farming support system according to the present example embodiment is different from the second and third example embodiments in that a worker is encouraged to perform farming support registration through identifiable display of a specific field area on a communication terminal among field areas generated based on position information obtained by a position information obtainment unit carried by a worker of a field. Other configuration and operation are similar to the second and third example embodiments, thus, the same signs are assigned to the same configuration and operation and the detailed description thereof will be omitted.

### <<Overview of farming support system>>

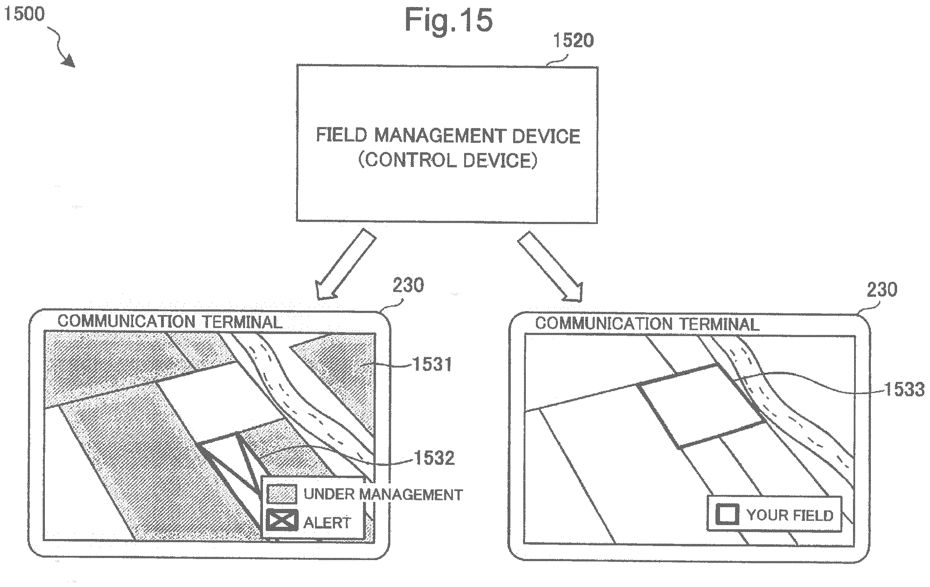

Fig. 15 is a diagram illustrating an overview of a configuration and operation of a farming support system 1500 according to the present example embodiment. Note that, in Fig. 15, the same components as those in Figs. 2 and 12 are assigned the same reference numbers, thus, the overlapping description will be omitted.

In Fig. 15, a field management device 1520 generates a field area in accordance with processing shown in the second or third example embodiments and generates an image where the field area overlaps a map. The field management device 1520 identifiably displays a predetermined field area, based on information obtained from a field information database 240 and a field registration database 413.

For example, in the lower left picture of Fig. 15, a communication terminal 230 identifiably displays a field area 1531 (illustrated as a half-tone dot meshed field area) registered in (that is, under the management of) the field management device 1520, and a field area 1532 (illustrated in a bold frame) where some emergency incident occurred. On the other hand, in the lower right picture of Fig. 15, the communication terminal 230 identifiably displays a field area 1533 relevant to a worker who has the communication terminal 230 that is communicatively connected with the field management device 1520. Such a display can encourage the worker of the field to perform field registration processing.

### (Specific field area table)

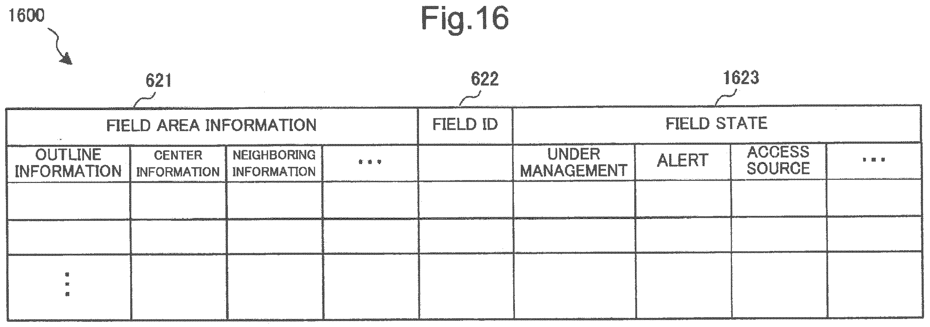

Fig. 16 is a diagram illustrating a configuration of a specific field area table 1600 according to the present example embodiment. The specific field area table 1600 is used in processing of specifying a field area and identifiably displaying the specified field area to a worker of the field. In Fig. 16, the same components as those in Fig. 6B are assigned the same reference numbers, thus, the overlapping description will be omitted.

The specific field area table 1600 stores a specified field state 1623 in association with field area information 621 and a field ID 622. The specified field state 1623 includes information representing whether a field is under management of the field management device 1520 (that is, whether the field has been registered from a communication terminal of a worker), information representing an abnormal occurrence (alert) in the field area, or information representing that the field is the field area of a worker who accessed the field management device 1520. The field management device 1520 identifiably shows such a field state 1623 on a communication terminal of a worker of the field. Note that the field management device 1520 may identifiably show the field state 1623 in a separate manner or identifiably show in a combinatorial manner.

According to the present example embodiment, a worker can be encouraged to register to a farming support through identifiable display of a specific field area (for example, a field area under the farming support or a field area of a worker) on a communication terminal used by the worker of the field.

### [Fifth example embodiment]

Next, a farming support system according to a fifth example embodiment of the present invention will be described. The farming support system according to the present example embodiment is different from the system described in the second to fourth example embodiments in that an image captured from the sky over a field area is used in processing for recognizing a field area. Other configuration and operation are similar to the second to fourth example embodiments, thus, the same signs are assigned to the same configuration and operation and the detailed description thereof will be omitted.

An image captured from the sky includes a satellite photograph and images and videos captured from a helicopter, a light airplane, a drone, and the like. Using these images, a kind of crop that is being grown in a field, a growing process, a growing state, a harvest state, and the like can be recognized. The present example embodiment includes generating an image where a sky image is resized into and overlaps a map on which a field area was generated, displaying the generated image on the communication terminal of the worker of the field, and, thereby, clarifying the field state. Further, the present example embodiment includes processing of storing a captured image in association with an image area identifier is performed over a plurality of times and estimating the field area based on the plurality of sky images. The present example embodiment includes generating a field area identified by a field identifier on a map by referring to the estimated field area. Further, in the present example embodiment, a field area can also be revised using the estimated field area.

### <<Overview of farming support system>>

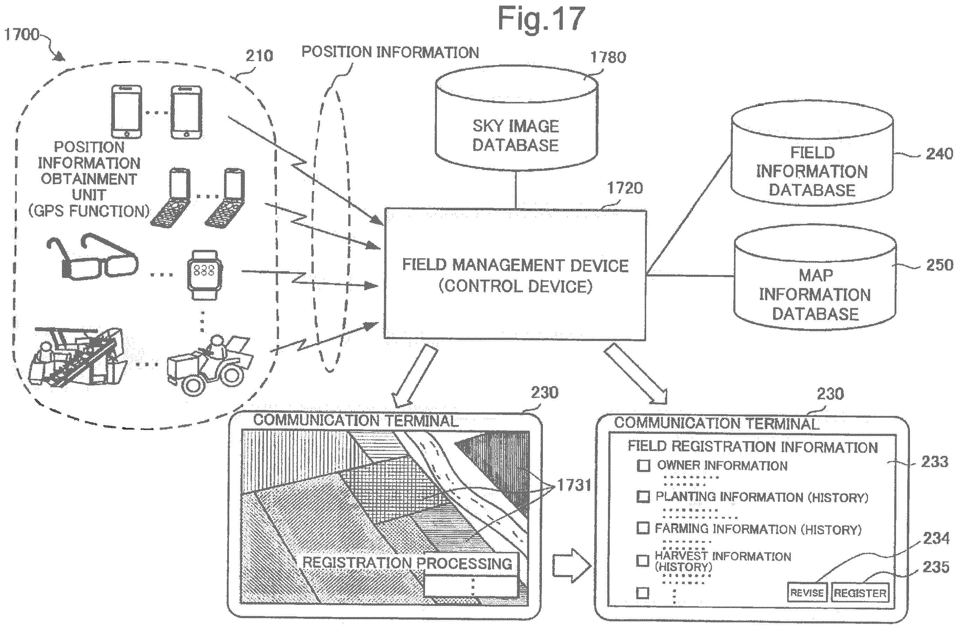

Fig. 17 is a diagram illustrating an overview of a configuration and operation of a farming support system 1700 according to the present example embodiment. In Fig. 17, the same components as those in Figs. 2, 12, and 15 are assigned the same reference numbers, thus, the overlapping description will be omitted.

In Fig. 17, a sky image database 1780 is added in addition to the components of Fig. 2. The sky image database 1780 stores a satellite photograph and sky images of a field captured from a helicopter, a light airplane, a drone, and the like.

Using an image obtained from the sky image database 1780, the field management device 1720 resizes the sky image and further overlays the sky image on an image where a field area overlaps a map generated as in the above example embodiments. The sky image includes abundant information of a farming target, such as a growth state and a harvest state, and the field areas 1731 in the overlapped image allow recognition of different states at a glance.

Although not clearly illustrated in Fig. 17, a field area may be estimated by storing a sky photograph over a plurality of times and analyzing them. The estimated field area may be used in combination with a field area that is generated based on position information as described in the above example embodiments. For example, revision processing is possible utilizing the strengths of both field areas, thereby generating a more accurate field area.

### (Size adjustment table)

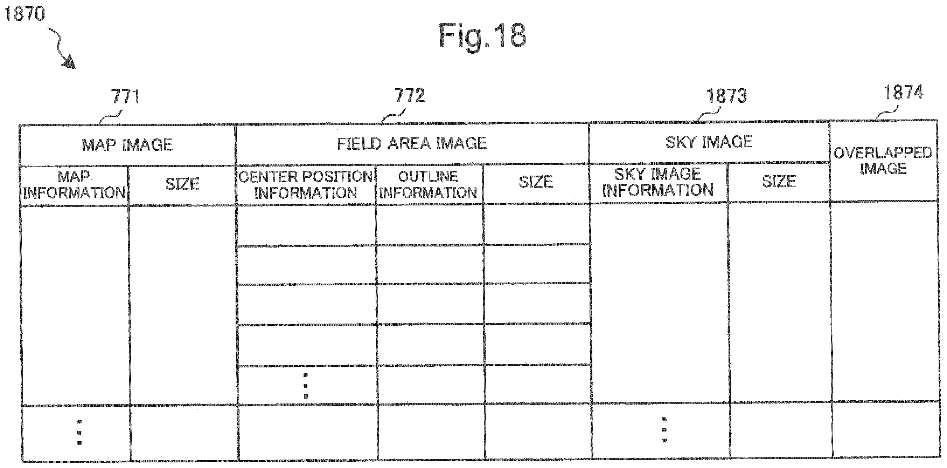

Fig. 18 is a diagram illustrating a configuration of a size adjustment table 1870 according to the present example embodiment. The size adjustment table 1870 is used in processing of resizing a sky image captured from the sky for making the sky image further overlap a map that is overlapped by a field area. In Fig. 18, the same components as those in Fig. 7C are assigned the same reference numbers, thus, the description thereof is omitted.

The size adjustment table 1870 includes a sky image 1873, of which size is adjusted to an overlapped map image 771 and field area image 772, and an overlapped image 1874. The sky image 1873 includes sky photograph information and a size. Here, the size includes not only a value representing large or small but also a value of adjusted angle and the like. When the sky photograph information is low altitude photographs captured using a drone or the like, the plurality of photographs are combined especially by resizing the peripherals of the images.

### (Field revision table)

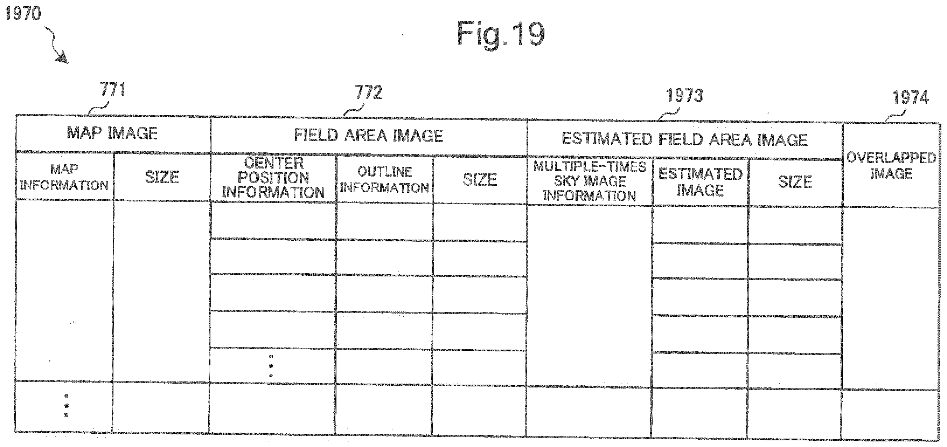

Fig. 19 is a diagram illustrating a configuration of a field revision table 1970 according to the present example embodiment. The field revision table 1970 is used in processing of revising a field area that is generated based on position information of a worker of a field, in accordance with the features, such as color, obtained from sky photograph information.

The field revision table 1970 can include an estimated field area image 1973 that was estimated based on sky photographs and an overlapped image 1974 obtained by revising the field information. It is preferable that the revision of field information is not prioritizing the estimated field area image 1973, but the revision is made in consideration of both the field area image 772 that was generated from position information of a worker of a field and the estimated field area image 1973 that was estimated from the sky photographs.

The present example embodiment can overlay an image captured from the sky on a field area determined based on position information, show the overlaid image on a communication terminal of a worker of the field, and, thereby, increase farming information of a field area..

### [Sixth example embodiment]

Next, a farming support system that includes a field management device as a control device according to a sixth example embodiment of the present invention will be described. The farming support system according to the present example embodiment is different from the systems described in the second to fifth example embodiments in that a field area overlaid on a map can be revised based on information relating to revision of the field area included in operation instruction information that is received from a communication terminal of a worker. Other configuration and operation are similar to the second to fifth example embodiments, thus, the same signs are assigned to the same configuration and operation and the detailed description thereof will be omitted.

### <<Overview of farming support system>>

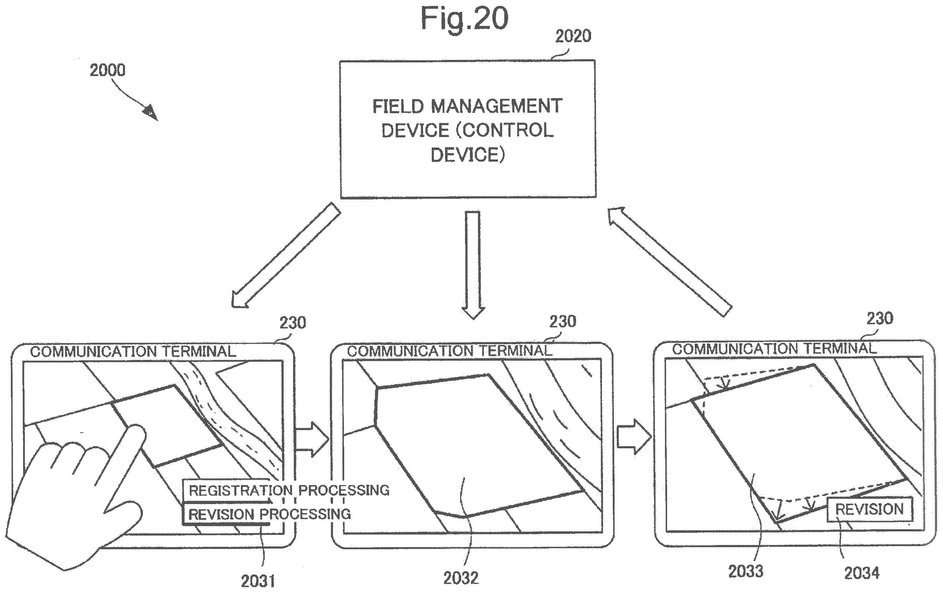

Fig. 20 is a diagram illustrating an overview of a configuration and operation of a farming support system 2000 according to the present example embodiment. Note that, in Fig. 20, the same components as those in Figs. 2, 12, 15, and 17 are assigned the same reference numbers, thus, the overlapping description will be omitted.

In Fig. 20, when a field area on the communication terminal 230 is incorrect, the field area can be revised based on an image where a generated field area overlaps a map in the above-described example embodiments. The lower left picture of Fig. 20 represents that a field area to be revised and revision processing are instructed. For example, the field management device 2020 receives a revision instruction, enlarges the specified field area, and displays the enlarged field area 2032 on the communication terminal 230 as in the lower center picture. Then, a worker of the field can change the field area to an accurate field area 2033 by moving the boundary of the field area enlarged on the display screen. Then, as illustrated in the lower right picture of Fig. 20, field area information stored in the field area database 407 or field registration database 413 of the field management device 2020 can be revised in accordance with a revision input 2034.

### (Field revision table)

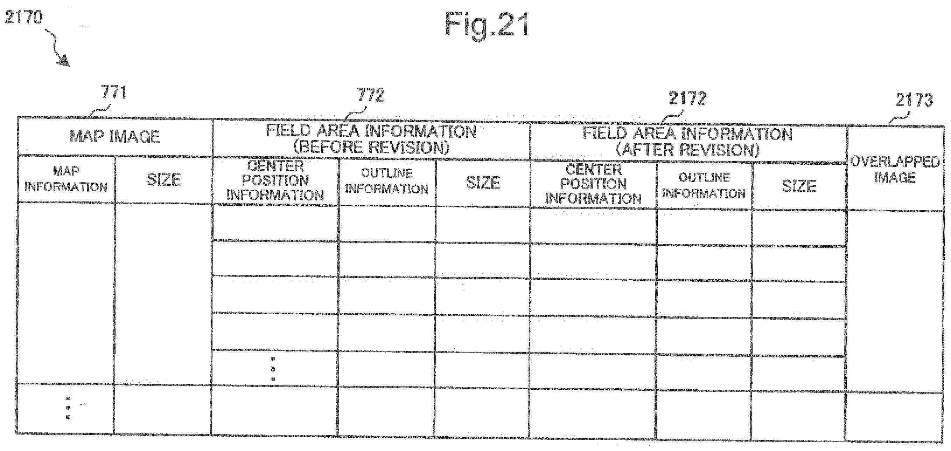

Fig. 21 is a diagram illustrating a configuration of a field revision table 2170 according to the present example embodiment. The field revision table 2170 is used in processing of revising a field area by an operation on the display screen, based on information relating to revision of the field area included in operation instruction information that a worker performed using a communication terminal. In Fig. 21, the same components as those in Fig. 7C are assigned the same reference numbers, thus, the description thereof will be omitted.

The field revision table 2170 stores a field area image (after revision) 2172 that has been revised from a field area image (before revision) 772 by an operation on the display screen. Then, the map image 771 stores an overlapped image 2173 overlapped by the field area image (after revision) 2172.

According to the present example embodiment, since a worker who owns a field or who works in the field can revise the field area, a more accurate field area can be generated.

### [Seventh example embodiment]

Next, a farming support system that includes a field management device as a control device according to a seventh example embodiment of the present invention will be described. The farming support system according to the present example embodiment also has the registration operation as described in the second example embodiment, but is different from the second to sixth example embodiments in that farming support information is provided using a field area that is generated based on position information collected from a worker and is displayed in an overlapping manner, as a primary key. Other configuration and operation are similar to the second example embodiment, thus, the same signs are assigned to the same configuration and operation and the detailed description thereof will be omitted.

For example, the field management device 220 transmits, to a communication terminal, information relating to a displaying screen representing a farming state in the field area, in accordance with an operation instruction information received from the communication terminal. Further, in accordance with the operation instruction information received from the communication terminal, the field management device 220 transmits, to the communication terminal, information relating to a setting screen used for processing of displaying a farming history of the field area or information relating to a displaying screen used for processing of displaying a farming work in the field area.

### <<Overview of farming support system>>

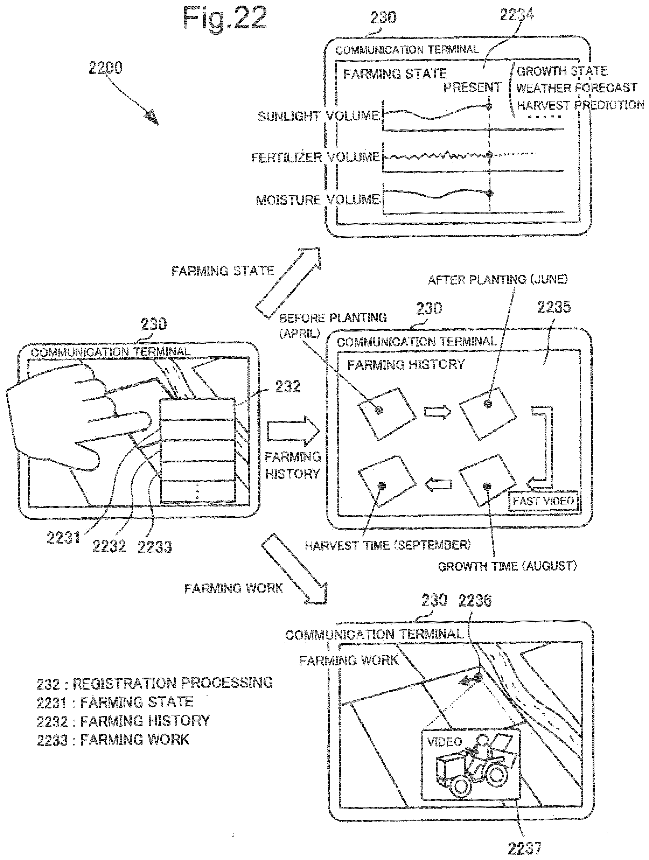

Fig. 22 is a diagram illustrating an example of an overview of a farming support by the farming support system 2200 according to the present example embodiment. In Fig. 22, the same components as those in Figs. 2, 12, 15, 17 or 20 are assigned the same reference numbers, thus, the overlapping description will be omitted.

In Fig. 22, after activating the field management application, the communication terminal 230 can display a farming state, display a farming history, or display a farming work, as part of a farming support, of a specified field area in addition to the registration processing described in the second example embodiment. The information provided by the farming support is not restricted to the above example.

When a farming state is specified, as illustrated in the upper right picture of Fig. 22, the communication terminal 230 displays farming information 2234 of the target field area managed by the field management device 220. The farming information 2234 includes detection data, such as insolation, a fertilizer amount, and a moisture volume, and farming support information, such as a future weather forecast and a harvest prediction. Whereas, when a farming history is specified, the communication terminal 230 displays a farming history 2235 during a period from planting until harvesting as in the center right picture. Using the farming history 2235 during a period from planting until harvesting, the farming history can be realistically reproduced by fast playing a video. In addition, when a farming work is specified, each work is displayed as in the lower right picture. In the lower right picture of Fig. 22, a plowing work by a plowing machine is displayed; for example, a plowing machine's movement history 2236 and a video 2237 relating to the plowing work are displayed, which can be used for improvement and checking of a farming work or education of novices.

According to the present example embodiment, various farming support information can be provided in accordance with an easy instruction operation from a communication terminal using a field area as a key.

### [Other example embodiments]

The claimed invention has been described so far with reference to the above-described example embodiments without limitation thereto. Various modifications that will be understood by those skilled in the art can be made to a configuration and details of the claimed invention within the scope thereof. In addition, any system or device combining different features included in the example embodiments in any manner is also included in the scope of the present invention.

Further, the present invention may be applied to a system constituted by a plurality of machines or may be applied to a single device. Furthermore, the present invention is applicable to a case where the control program that achieves the functions of the example embodiment is provided directly or remotely to a system or a device. Accordingly, in order to achieve the functions of the present invention by a computer, a program to be installed in the computer, a medium storing the program, and a world wide web (WWW) server providing the program for download are also included in the scope of the present invention. In particular, a non-transitory computer readable medium that at least stores a program for causing a computer to execute the processing steps included in the above-described example embodiments is included within the scope of the present invention.

A part of or all of the above-described example embodiments may be described as the following supplementary notes. However, the present invention exemplarily described in the above-described example embodiments is not limited to the following.

### (Supplementary note 1)

A control device comprising:
receiving means for receiving position information obtained by position information obtainment means carried by a worker of a field;
first storage means for storing the position information received by the receiving means; and
generation means for generating a field area identified by a field identifier on a map including the field based on the stored position information.

### (Supplementary note 2)

The control device according to supplementary note 1 further comprising
display control means for controlling a communication terminal used at the field to display the generated field area on the map identifiably.

### (Supplementary note 3)

The control device according to supplementary note 1 or supplementary note 2 further comprising
transmission means for transmitting information relating to a setting screen or information relating to a displaying screen to a communication terminal in accordance with operation instruction information from the communication terminal used at the field, wherein
the setting screen is for registering the field and
the displaying screen is for displaying a farming state of the field.

### (Supplementary note 4)

The control device according to any one of supplementary notes 1 to 3 further comprising
transmission means for transmitting information relating to a setting screen or information relating to a display screen to a communication terminal in accordance with operation instruction information from the communication terminal used at the field, wherein
the setting screen is for displaying a farming history on the field and
the display screen is for displaying a farming work on the field.

### (Supplementary note 5)

The control device according to any one of supplementary notes 1 to 4, wherein
the position information indicates an entry position and an exit position included in the position information across the field area and
the generation means generates the field area based on the entry position and the exit position,

### (Supplementary note 6)

The control device according to any one of supplementary notes 1 to 4, wherein
the position information indicates an irrigation block or a ridge around the field and
the generation means generates the field area based on the position information.

### (Supplementary note 7)

The control device according to any one of supplementary notes 1 to 6, wherein
the generation means revises the field area based on operation instruction information when receiving the operation instruction information for revising the field area from a communication terminal.

### (Supplementary note 8)

The control device according to any one of supplementary notes 1 to 7 further comprising
obtainment means for obtaining a sky image of an area including the field, wherein
the generation means overlaps the sky image resized to the map with the map.

### (Supplementary note 9)

The control device according to supplementary note 8 further comprising
second storage means for associating the obtained image and an image identifier and storing it more than once and
estimation means for estimating the field area based on the image obtained more than once, wherein
the generation means refers to the estimated field area and generates a field area identified by the field area identifier on the map.

### (Supplementary note 10)

The control device according to any one of supplementary notes 1 to 9 further comprising
control means for selecting the specific field area and controlling a communication terminal to display the selected field area.

### (Supplementary note 11)

A control method comprising:
receiving position information obtained by position information obtainment means carried by a worker of a field;
storing the received position information to storage means; and
generating a field area identified by a field identifier on a map including the field based on the stored position information.

### (Supplementary note 12)

A recoding medium storing a control program recorded therein, the program making a computer achieve, the program comprising:
a receiving function for receiving position information obtained by position information obtainment means carried by a worker of a field;
a first storage function for storing the position information received by the receiving function; and
a generation function for generating a field area identified by a field identifier on a map including the field based on the stored position information.

### (Supplementary note 13)

A communication terminal comprising:
start means for starting a farming support application program; and
display means for displaying a field area generated on a map by the farming support application program based on position information obtained and stored by position information obtain means carried by a worker of a field; wherein
the display means displays farming information of the field area in accordance with instruction for the field area.

### (Supplementary note 14)

A control method comprising:
starting a farming support application program;
controlling display means to display a field area generated on a map by the farming support application program based on position information obtained and stored by position information obtain means carried by a worker of a field; and
displaying farming information of the field area in accordance with instruction for the field area while the displaying means displays the field area.

### (Supplementary note 15)

A recoding medium storing a control program of a communication terminal recorded therein, the program causing a computer to achieve:
a start function for starting a farming support application program; and
a display function for displaying a field area generated on a map by the farming support application program based on position information obtained and stored by position information obtain means carried by a worker of a field; wherein
the display means in the display function displays farming information of the field area in accordance with specifying the field area.

### (Supplementary note 16)

A farming support system comprising:
obtainment means for being carried by a worker of a field and obtaining position information;
storing means for storing the position information obtained by the obtainment means;
generation means for generating a field area identified by a field identifier on a map based on the stored position information; and
display means for displaying the field area generated on the map on a communication terminal identifiably.

### (Supplementary note 17)

A farming support method comprising:
obtaining position information by position information obtainment means carried by a worker at a field;
storing the obtained position information;
generating a field area identified by a field identifier on a map based on the stored position information; and
displaying the field area generated on the map on a communication terminal identifiably.

This application is based upon and claims the benefit of priority from Japanese patent application No. 2016-060450, filed on March 24, 2016, the disclosure of which is incorporated herein in its entirety.

## Claims

1. A control device comprising:
receiving means for receiving position information obtained by position information obtainment means carried by a worker of a field;
first storage means for storing the position information received by the receiving means; and
generation means for generating a field area identified by a field identifier on a map including the field based on the stored position information.

2. The control device according to claim 1 further comprising
display control means for controlling a communication terminal used at the field to display the generated field area on the map identifiably.

3. The control device according to claim 1 or claim 2 further comprising
transmission means for transmitting information relating to a setting screen or information relating to a displaying screen to a communication terminal in accordance with operation instruction information from the communication terminal used at the field, wherein
the setting screen is for registering the field, and
the displaying screen is for displaying a farming state of the field.

4. The control device according to any one of claims 1 to 3 further comprising
transmission means for transmitting information relating to a setting screen or information relating to a display screen to a communication terminal in accordance with operation instruction information from the communication terminal used at the field, wherein
the setting screen is for displaying a farming history on the field, and
the display screen is for displaying a farming work on the field.

5. The control device according to any one of claims 1 to 4, wherein
the position information indicates an entry position and an exit position included in the position information across the field area, and
the generation means generates the field area based on the entry position and the exit position.

6. The control device according to any one of claims 1 to 4, wherein
the position information indicates an irrigation block or a ridge around the field, and
the generation means generates the field area based on the position information.

7. The control device according to any one of claims 1 to 6, wherein
the generation means revises the field area based on operation instruction information when receiving the operation instruction information for revising the field area from a communication terminal.

8. The control device according to any one of claims 1 to 7 further comprising
obtainment means for obtaining a sky image of an area including the field, wherein
the generation means overlaps the sky image resized to the map with the map.

9. The control device according to claim 8 further comprising
second storage means for associating the obtained image and an image identifier and storing it more than once; and
estimation means for estimating the field area based on the image obtained more than once, wherein
the generation means refers to the estimated field area and generates a field area identified by the field area identifier on the map.

10. The control device according to any one of claims 1 to 9 further comprising
control means for selecting the specific field area and controlling a communication terminal to display the selected field area.

11. A control method comprising:
receiving position information obtained by position information obtainment means carried by a worker of the field;
storing the received position information to storage means; and
generating a field area identified by a field identifier on a map including the field based on the stored position information.

12. A recoding medium storing a control program recorded therein, the program making a computer achieve, the program comprising:
a receiving function for receiving position information obtained by position information obtainment means carried by a worker of a field;
a first storage function for storing the position information received by the receiving function; and
a generation function for generating a field area identified by a field identifier on a map including the field based on the stored position information.

13. A communication terminal comprising:
start means for starting a farming support application program; and
display means for displaying a field area generated on a map by the farming support application program based on position information obtained and stored by position information obtain means carried by a worker of a field; wherein
the display means displays farming information of the field area in accordance with instruction for the field area.

14. A control method comprising:
starting a farming support application program;
controlling display means to display a field area generated on a map by the farming support application program based on position information obtained and stored by position information obtain means carried by a worker of a field; and
displaying farming information of the field area in accordance with instruction for the field area while the displaying means displays the field area.

15. A recoding medium storing a control program of a communication terminal recorded therein, the program causing a computer to achieve:
a start function for starting a farming support application program; and
a display function for displaying a field area generated on a map by the farming support application program based on position information obtained and stored by position information obtain means carried by a worker of a field; wherein
the display means in the display function displays farming information of the field area in accordance with specifying the field area.

16. A farming support system comprising:
obtainment means for being carried by a worker of a field and obtaining position information;
storing means for storing the position information obtained by the obtainment means;
generation means for generating a field area identified by a field identifier on a map based on the stored position information; and
display means for displaying the field area generated on the map on a communication terminal identifiably.

17. A farming support method comprising:
obtaining position information by position information obtainment means carried by a worker at a field;
storing the obtained position information;
generating a field area identified by a field identifier on a map based on the stored position information; and
displaying the field area generated on the map on a communication terminal identifiably.
